# EUROPÄISCHE PATENTSCHRIFT

(11) **EP 1 638 800 B1**
(45) Veröffentlichungstag und Bekanntmachung des Hinweises auf die Patenterteilung: **15.12.2010**
(21) Anmeldenummer: 04739654.4
(22) Anmeldetag: 07.06.2004
(51) Int. Cl.: B60K 17/04

(54) **PORTALACHSE**
PORTAL AXLE
PONT PORTIQUE

(30) Priorität: 02.07.2003 DE 10329687
(43) Veröffentlichungstag der Anmeldung: 29.03.2006
(60) Teilanmeldung: 07101656.2
(73) Patentinhaber: ZF FRIEDRICHSHAFEN Aktiengesellschaft, 88038 Friedrichshafen (DE)
(72) Erfinder: NEUMÜLLER, Rudolf, 94124 Büchlberg (DE); HÄUSSLER, Stefan, 94034 Passau (DE)
(86) Internationale Anmeldenummer: PCT/EP2004/006118
(87) Internationale Veröffentlichungsnummer: WO 2005/002898

(56) Entgegenhaltungen:
- EP-A- 0 993 981
- FR-A- 940 078
- GB-A- 1 030 287
- US-A- 4 860 843
- US-A- 5 907 973

## Beschreibung

Die Erfindung bezieht sich auf eine Portalachse, insbesondere für Niederflur-Omnibusse, nach der im Oberbegriff von Anspruch 1 näher definierten Art.

Gattungsgemäße Portalachsen werden insbesondere bei Niederflur-Stadtomnibussen verwendet, bei welchen es wichtig ist, den Fahrzeugboden so tief anzuordnen, damit die Passagiere bequem vom Gehsteig in den Omnibus einsteigen können. Dabei ist zu berücksichtigen, dass der Omnibus über einen ausreichend breiten Mittelgang verfügt und gleichzeitig die Bodenfreiheit zum Überfahren von Hindernissen nicht unterschritten wird.

Die DE 196 04 730 A1 offenbart eine Portalachse für Niederflur-Omnibusse, bei welcher ein Portalgetriebe über eine Achswelle von einem Ausgleichsgetriebe angetrieben wird, wobei zwischen dem Antriebsritzel und dem Abtriebsstirnrad zwei Stirnräder angeordnet sind, deren Drehachsen auf derselben Höhe wie die Drehachse des Antriebsritzels angeordnet sind, um eine Leistungsverzweigung am Antriebsritzel zu erhalten, um das Antriebsritzel im Durchmesser und der Breite zu minimieren. Der Portalabstand zwischen der Drehachse des Antriebsritzels und der Drehachse des Abtriebsstirnrades kann nicht weiter vergrößert werden, da hierfür eine weitere Durchmesservergrößerung der Zwischenräder notwendig wäre, was eine Federträgeranbindung auf die übliche Weise nicht ermöglicht. Die Bodenfreiheit einer Niederflusachse wird durch die Lage der Drehachse und dem Durchmesser des Tellerrades Ausgleichsgetriebes bestimmt.

Die Auslegeschrift DE 21 16 441 offenbart ein Achsgetriebe für Kraftfahrzeuge mit Portalachse, bei welcher das Antriebsritzel, wie bei der DE 196 04 730 A1, auf einer Ebene mit den Zwischenrädern angeordnet ist und mit diesen Zwischenrädern in leistungsverzweigter Wirkverbindung steht, wobei die Zwischenräder aus einem ersten Stirnrad und einem zweiten Stirnrad bestehen, welche drehfest miteinander verbunden sind, wobei das erste Stirnrad mit dem Antriebsritzel und das zweite Stirnrad mit einem Abtriebsstirnrad in Verbindung stehen, wobei das Abtriebsstirnrad das Fahrzeugrad antreibt. Die Drehachsen der Vorgelegewellen und die Drehachse der Achswelle sollen in einer gemeinsamen Ebene liegen, wobei die Ritzelwelle radial allseitig beweglich gelagert ist, um das Tragbild der Zahnflanken weiter zu verbessern.

Den Stand der Technik nach dem Oberbegriff des Anspruchs 1 stellt hier dar EP 0 993 981.

Der vorliegenden Erfindung liegt die Aufgabe zugrunde, eine Portalachse, insbesondere für niederflurige Fahrzeuge, wie beispielsweise Stadtomnibusse, zu schaffen, bei welcher eine ausreichende Bodenfreiheit vorhanden ist und der Portalabstand gegenüber dem Stand der Technik vergrößert wird, ohne die Anbindungsmöglichkeiten der Portalchse an das Fahrzeug-Chassis zu verschlechtern.

Die Aufgabe wird mit einer, auch die kennzeichnenden Merkmale des Hauptanspruchs aufweisenden, gattungsgemäßen Portalachse gelöst.

Erfindungsgemäß weist die Portalachse ein angetriebenes Ausgleichsgetriebe auf, dessen Abtrieb über Achswellen mit dem Antrieb der Portalgetriebe verbunden ist. Die Portalgetriebe befinden sich jeweils in der Nähe der Fahrzeugräder und sind einerseits mit einem Achsrohr, welches die beiden Portalgetriebe verbindet, und andererseits mit einem Nabenträger, welcher eine Radlagerung beinhaltet, verbunden. Vorzugsweise ist zwischen dem Portalgetriebe und der Radfelge eine Bremse, wie beispielsweise eine Scheibenbremse, angeordnet. Das Ausgleichsgetriebe ist vorzugsweise einem Portalgetriebe benachbart angeordnet. Das Antriebsstirnrad, welches mit der Achswelle verbunden ist, steht in Wirkverbindung mit einem ersten Vorgelegestirnrad, welches drehfest mit einem zweiten Vorgelegestirnrad verbunden ist, wobei das zweite Vorgelegestirnrad mit einem Abtriebsstirnrad in Wirkverbindung steht, welches den Abtrieb des Portalgetriebes bildet und somit mit dem Fahrzeugrad in Verbindung steht. Das Fahrzeugrad und das Abtriebsstirnrad weisen dieselbe Drehachse auf. Die Übersetzung des Portalgetriebes ist gegenüber dem Stand der Technik vergrößert, wodurch die Übersetzung im Ausgleichsgetriebe bzw. im Kegelradgetriebe verkleinert werden kann, wodurch die Bodenfreiheit durch ein verkleinertes Ausgleichsgetriebe sich vergrößert oder die Bodenfreiheit durch die Verwendung eines verkleinerten Ausgleichsgetriebes und eines verkleinerten Tellerrades bei vergrößertem Portalabstand beibehalten werden kann. Eine Vergrößerung der Übersetzung im Portalgetriebe ist nur möglich durch die Anordnung des Antriebsstirnrades, dessen vertikaler Abstand zum Untergrund, auf welchem das Fahrzeugrad aufsteht, geringer ist als der vertikale Abstand der Drehachse des Vorgelegestirnrades. Dieser Portaltrieb ist mit einem horizontalen Achsversatz in Fahrtrichtung ausgeführt, damit das Antriebsrad und die Vorgelegestirnräder bei einem vorgegebenen Achsversatz und vorgegebenen Untersetzungsverhältnis möglichst groß im Durchmesser gewählt werden können und somit eine ausreichende Festigkeit besitzen, um das Antriebsmoment zu übertragen. Die Drehachse des Antriebsstirnrades ist beabstandet zur Drehachse des Vorgelegestirnrades angeordnet. Die Drehachse des Vorgelegestirnrades ist vorzugsweise beabstandet zur Drehachse des Abtriebsstirnrades angeordnet. Somit ist es möglich, den Portalabstand zwischen der Drehachse des Antriebsstirnrades und der Drehachse des Abtriebsstirnrades und die Übersetzung im Portalgetriebe zu vergrößern, wodurch einerseits der Fahrzeugboden durch eine Vergrößerung des Portalabstands abgesenkt und andererseits durch Verwendung eines kleineren Ausgleichsgetriebes und kleineren Tellerrades die Bodenfreiheit beibehalten werden kann. Ebenso besteht bei dieser Anordnung die Möglichkeit, die Federträger, über welche die Portalachse mit dem Chassis verbunden ist, direkt am Portalgehäuse anzuordnen, mit diesem ortsfest zu verbinden oder einstückig mit diesem auszubilden. Vorzugsweise ist die Verzahnung des Portalgetriebes als Schrägverzahnung ausgeführt, wobei die Verzahnung des ersten und des zweiten Vorgelegestirnrades dergestalt ausgeführt sind, dass sich die Axialkräfte des ersten und des zweiten Vorgelegestirnrades nahezu aufheben. Durch die Verwendung eines Antriebsstirnrades, welches ausschließlich mit einem weiteren Stirnrad in Wirkverbindung steht und somit keine Leistungsverzweigung mehr stattfindet, besteht die Möglichkeit, das Antriebsstirnrad auf einfache Weise zu lagern, ohne das Portalgetriebe statisch überzubestimmen. Ebenso besteht die Möglichkeit, das Abtriebsstirnrad im Durchmesser so zu begrenzen, dass eine Bremse, vorzugsweise eine Scheibenbremse, zwischen dem Portalgetriebe und der Radfelge angeordnet sein kann. Dadurch, dass das Antriebsrad in Fahrtrichtung horizontal versetzt ist, wird die gesamte Achsbrücke mit dem Ausgleichsgetriebe auch in Fahrtrichtung horizontal versetzt. Dadurch kann eine längere Gelenkwelle verwendet werden, wodurch sich der Gelenkwellenbeugewinkel verkleinert. Erfindungsgemäß kann der Durchmesser des Tellerrades minimiert werden, indem die Übersetzung des Portaltriebes vergrößert wird. Dies ist ausschließlich durch die Verwendung des erfindungsgemäßen Portalgetriebes möglich. Bei der Übersetzung des Portaltriebes nach DE 196 04 730 A1 wird die Übersetzung durch die Durchmesser des Abtriebstirnrades und des Antriebstirnrades bestimmt. Das Abtriebsstirnrad kann bei dieser Portalachse nicht vergrößert werden, da dieses sonst mit der Bremse kollidieren würde, das Antriebsstirnrad kann aus Festigkeitsgründen nicht minimiert werden. Somit ist eine Vergrößerung der Übersetzung des Portaltriebes durch Verwendung der DE 196 047 730 A1 nicht möglich, da das Tellerrad nicht minimiert werden kann, wodurch sich durch eine Vergrößerung des Portalversatzes die Bodenfreiheit unerlaubt minimieren würde.

Weitere Merkmale sind der Figuren-Beschreibung zu entnehmen.

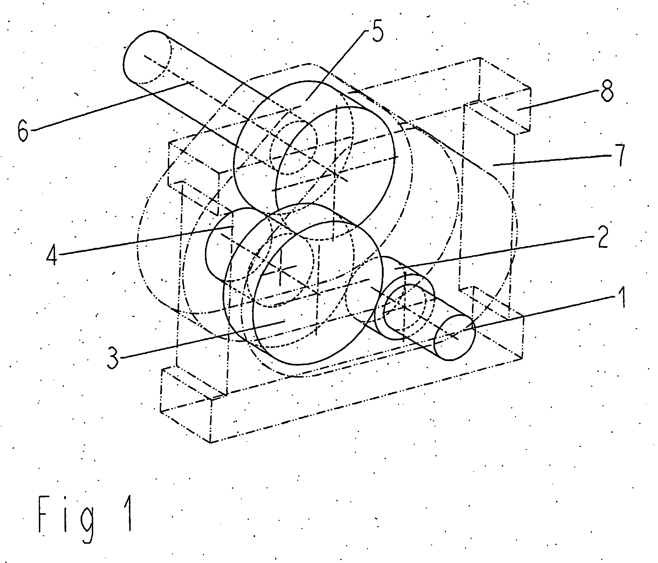

- Fig. 1: ist einer isometrischen Darstellung des Portalgetriebes zu entnehmen und

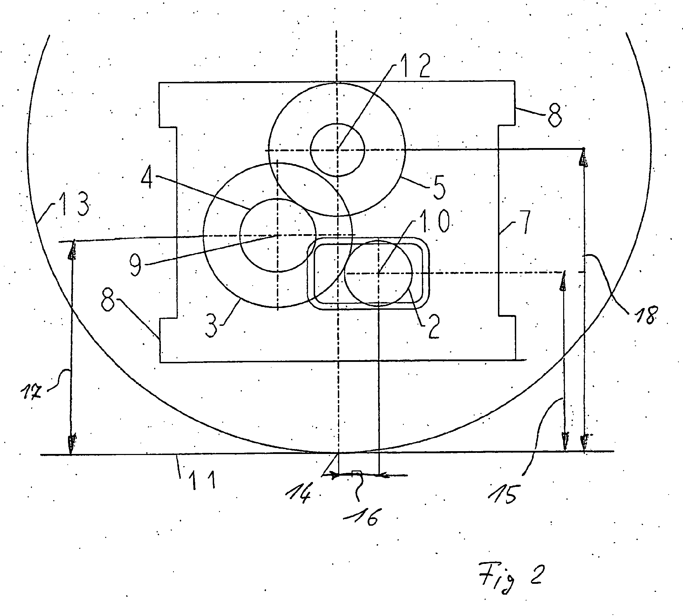

- Fig. 2: zeigt einen schematischen Schnitt durch das Portalgetriebe.

Fig. 1:
   Der prinzipielle Aufbau einer Portalachse für niederflurige Fahrzeuge ist der DE 196 04 730 A1 zu entnehmen, deren Merkmale, bis auf das Portalgetriebe, vollständig umfaßt sein sollen.
   Ein nicht gezeigtes Ausgleichsgetriebe treibt eine Achswelle 1 an, welche mit einem Antriebsstirnrad 2 drehfest verbunden ist. Das Antriebsstirnrad 2 ist in Wirkverbindung mit einem-ersten Vorgelegestirnrad 3, welches drehfest mit einem zweiten Vorgelegestirnrad 4 verbunden oder mit diesem einstückig ausgebildet ist. Das zweite Vorgelegestirnrad 4 ist in Wirkverbindung mit dem Abtriebsstirnrad 5, welches über eine Abtriebswelle 6 ein nicht gezeigtes Fahrzeugrad antreibt. Das Portalgetriebegehäuse 7 umgibt das Portalgetriebe und weist Anbindungsstellen 8 auf, an welchen nicht gezeigte Federträger verbunden werden können, welche die Fahrzeugachse mit dem Fahrzeug-Chassis verbinden. Die Achswelle 1 ist im oberen Bereich eines nicht gezeigten Achsrohres angeordnet. Das zweite Vorgelegestirnrad 4 und das Abtriebsstirnrad 5 sind benachbart zur nicht gezeigten Anflanschfläche der Felge und das Antriebsstirnrad 2 und das Vorgelegestirnrad 3 sind benachbart zur nicht gezeigten Achsbrücke angeordnet. Es besteht auch die Möglichkeit, das Antriebsstirnrad 2 und das Vorgelegestirnrad 3 benachbart zur nicht gezeigten Anflanschfläche der Felge und das Abtriebsstirnrad 5 und das zweite Vorgelegestirnrad 4 benachbart zur Achsbrücke in Richtung Achswelle 1 anzuordnen, wodurch eine Aussparung in der Nähe der Bremse angebracht werden kann. Durch Verwendung dieser Aussparung kann der Freigang zum Bremssattel oder Bremszylinder einer Scheibenbremse ausreichend groß ausgebildet werden.
Fig. 2:
   Innerhalb eines Portalgetriebegehäuses 7 ist das Portalgetriebe angeordnet, bei welchem das Antriebsstirnrad 2 in Wirkverbindung mit einem ersten Vorgelegestirnrad 3 steht. Das Vorgelegestirnrad 3 ist drehfest mit einem zweiten Vorgelegestirnrad 4 verbunden, welches in Wirkverbindung mit einem Abtriebsstirnrad 5 steht. Das erste Vorgelegestirnrad 3 und das zweite Vorgelegestirnrad 4 weisen dieselbe Drehachse 9 auf. Die Drehachse 10 des Antriebsstirnrades weist einen geringeren vertikalen Abstand 15 zum Untergrund 11 auf, auf welchem die Reifenaußenkontur 13 im Radaufstandspunkt 14 aufsteht, als der vertikale Abstand 17 der Drehachse 9 zum Untergrund 11 beträgt oder der Vertikale Abstand 18 der Drehachse 12 des Abtriebsstirnrades 5 zum Untergrund 11 beträgt. Die Drehachse 10 ist in vertikaler und horizontaler Richtung beabstandet zur Drehachse 9 angeordnet, die Drehachse 9 ist in vertikaler und horizontaler Richtung beabstandet zur Drehachse 12 angeordnet. Es besteht auch die Möglichkeit, die Drehachse 10 auf derselben vertikalen Linie wie die Drehachse 12 anzuordnen, so dass sich kein horizontaler Abstand 16 ergibt. Daduch ist es möglich, das rechte und das linke Portalgehäuse ohne horizontalen Versatz auszubilden, wodurch die Portalgehäuse gleich ausgebildet werden können. Vorzugsweise ist die Übersetzung zwischen dem Antriebsstirnrad 2 und dem ersten Vorgelegestirnrad 3 im Bereich von 2,2 ausgebildet. Vorzugsweise ist die Übersetzung zwischen dem zweiten Vorgelegestirnrad 4 und dem Abtriebsstirnrad 5 im Bereich von 1,8 ausgebildet. Somit kann ein Portalgetriebe ausgeführt werden, bei welchem der Portalabstand zwischen der Drehachse 12 und der Drehachse 10 in horizontaler Richtung im Bereich von 30 mm und in vertikaler Richtung im Bereich von 189 mm liegt. Somit besteht die Möglichkeit, das nicht gezeigte Ausgleichsgetriebe und das nicht gezeigte Tellerrad in seinem Durchmesser geringer zu gestalten, da es ein geringeres maximales Drehmoment erfährt und somit, bei gleichbleibender Bodenfreiheit, den Portalabstand vergrößert. Ebenso besteht die Möglichkeit, eine Bremse, insbesondere eine Scheibenbremse, zwischen der Radfelge und dem Portalgetriebe anzuordnen und die Aufnahme der Federträger über die Anbindungsstellen 8 auszubilden.

### Bezugszeichen

- 1: Achswelle
- 2: Antriebsstirnrad
- 3: erstes Vorgelegestirnrad
- 4: zweites Vorgelegestirnrad
- 5: Abtriebsstirnrad
- 6: Abtriebswelle
- 7: Portalgetriebegehäuse
- 8: Anbindungsstellen
- 9: Drehachse
- 10: Drehachse
- 11: Untergrund
- 12: Drehachse
- 13: Reifenaußenkontur
- 14: Radaufstandspunkt
- 15: Vertikaler Abstand
- 16: Horizontaler Abstand
- 17: Vertikaler Abstand
- 18: Vertikaler Abstand

## Patentansprüche

1. Portalachse mit einem angetriebenen Ausgleichsgetriebe, welches über Achswellen (1) und über je ein Portalgetriebe mit je einem Fahrzeugrad verbunden ist, wobei das Fahrzeugrad um eine Drehachse (12) drehbar ist und auf einem Untergrund (11) aufsteht, wobei ein Antriebsstirnrad (2) von der Achswelle (1) angetrieben wird, und ein Abtriebsstirnrad (5) mit dem Fahrzeugrad verbunden ist und sich um die Drehachse (12) des Fahrzeugrades dreht, wobei ein vertikaler Abstand (15) der Drehachse (10) des Antriebsstirnrades (2) zum Untergrund (11) geringer ist als ein vertikaler Abstand (18) der Drehachse (12) des Abtriebsstirnrades (5) zum Untergrund (11), **dadurch gekennzeichnet, dass** in jedem Portalgetriebe das Antriebsstirnrad (2) mit einem ersten Vorgelegestirnrad (3) in Wirkverbindung steht, und das erste Vorgelegestirnrad (3) drehfest mit einem zweiten Vorgelegestirnrad (4) verbunden ist, und beide Vorgelegestirnräder (3, 4) sich um eine Drehachse (9) drehen, wobei das zweite Vorgelegestirnrad (4) mit dem Abtriebsstirnrad (5) in Wirkverbindung steht und die Drehachse (9) der Vorgelegestirnräder (3, 4) in vertikaler und horizontaler Richtung beabstandet zur Drehachse (12) des Abtriebsstirnrades (5) angeordnet ist und ein vertikaler Abstand (15) der Drehachse (10) des Antriebsstirnrades (2) zum Untergrund (11) geringer ist als ein vertikaler Abstand (17)der Drehachse (9) des Vorgelegestirnrades (3, 4) zum Untergrund (11), wodurch sich die Drehachse (9) des Vorgelegestirnrades (3, 4) in vertikaler Richtung zwischen der Drehachse (12) des Abtriebsstirnrades (5) und der Drehachse (10) des Antriebsstirnrades (2) befindet und die Achswelle (1) an einer oberen inneren Begrenzung einer Achsbrücke angeordnet ist.

2. Portalachse nach Anspruch 1, **dadurch gekennzeichnet, dass** die Stirnräder (2, 3, 4, 5) des Portalgetriebes schrägverzahnt ausgeführt sind.

3. Portalachse nach Anspruch 1, **dadurch gekennzeichnet, dass** die Schrägungswinkel der Schrägverzahnung des ersten und des zweiten Vorgelegestirnrades (3, 4) dergestalt ausgelegt sind, dass die Axialkräfte des ersten und des zweiten Vorgelegestirnrades (3, 4) sich nahezu aufheben.

4. Portalachse nach Anspruch 1, **dadurch gekennzeichnet, dass** Federträger, welche die Portalachse mit einem Fahrzeugchassis verbinden, mit dem Portalgetriebe verbunden sind.

5. Portalachse nach Anspruch 1, **dadurch gekennzeichnet, dass** das Antriebsstirnrad (2) in einem Portalgehäuse des Portalgetriebes gelagert ist.

6. Portalachse nach Anspruch 1, **dadurch gekennzeichnet, dass** eine Übersetzung zwischen dem Antriebsstirnrad (2) und dem ersten Vorgelegestirnrad (3) im Bereich 2,2 liegt.

7. Portalachse nach Anspruch 1, **dadurch gekennzeichnet, dass** eine Übersetzung zwischen dem zweiten Vorgelegestirnrad (4) und dem Abtriebsstirnrad (5) im Bereich von 1,8 liegt.

8. Portalachse nach Anspruch 1, **dadurch gekennzeichnet, dass** der horizontale Abstand zwischen der Drehachse (12) des Abtriebsstirnrades (5) und der Drehachse (10) des Antriebsstirnrades (2) im Bereich von 189 mm und der vertikale Abstand zwischen der Drehachse (12) des Abtriebsstirnrades (5) und der Drehachse (10) des Antriebsstirnrades (2) im Bereich von 30 mm liegen.

9. Portalachse nach Anspruch 1, **dadurch gekennzeichnet, dass** eine Achsbrücke in Fahrtrichtung versetzt zur Drehachse (12) des Fahrzeugrades angeordnet ist.

## Claims

1. Portal axle having a driven differential gearing which is connected via axle shafts (1) and via in each case one portal gearing to in each case one vehicle wheel, with the vehicle wheel being rotatable about an axis of rotation (12) and standing on an underlying surface (11), with a drive input spur gear (2) being driven by the axle shaft (1) and with a drive output spur gear (5) being connected to the vehicle wheel and rotating about the axis of rotation (12) of the vehicle wheel, with a vertical spacing (15) between the axis of rotation (10) of the drive input spur gear (2) and the underlying surface (11) being smaller than a vertical spacing (18) between the axis of rotation (12) of the drive output spur gear (5) and the underlying surface (11), **characterized in that**, in each portal gearing, the drive input spur gear (2) is operatively connected to a first counter spur gear (3), and the first counter spur gear (3) is connected to a second counter spur gear (4) for conjoint rotation therewith, and both counter spur gears (3, 4) rotate about an axis of rotation (9), with the second counter spur gear (4) being operatively connected to the drive output spur gear (5), and with the axis of rotation (9) of the counter spur gears (3, 4) being spaced apart in the vertical and horizontal directions from the axis of rotation (12) of the drive output spur gear (5), and with a vertical spacing (15) between the axis of rotation (10) of the drive input spur gear (2) and the underlying surface (11) being smaller than a vertical spacing (17) between the axis of rotation (9) of the counter spur gear (3, 4) and the underlying surface (11), as a result of which the axis of rotation (9) of the counter spur gear (3, 4) is situated in the vertical direction between the axis of rotation (12) of the drive output spur gear (5) and the axis of rotation (10) of the drive input spur gear (2), and the axle shaft (1) is arranged on an upper inner delimitation of an axle bracket.

2. Portal axle according to Claim 1, **characterized in that** the spur gears (2, 3, 4, 5) of the portal gearing are helically toothed.

3. Portal axle according to Claim 1, **characterized in that** the helix angles of the helical toothing of the first and second counter spur gears (3, 4) are designed such that the axial forces of the first and second counter spur gears (3, 4) are approximately cancelled out.

4. Portal axle according to Claim 1, **characterized in that** spring supports which connect the portal axle to a vehicle chassis are connected to the portal gearing.

5. Portal axle according to Claim 1, **characterized in that** the drive input spur gear (2) is mounted in a portal housing of the portal gearing.

6. Portal axle according to Claim 1, **characterized in that** a transmission ratio between the drive input spur gear (2) and the first counter spur gear (3) lies in the region of 2.2.

7. Portal axle according to Claim 1, **characterized in that** a transmission ratio between the second counter spur gear (4) and the drive output spur gear (5) lies in the region of 1.8.

8. Portal axle according to Claim 1, **characterized in that** the horizontal spacing between the axis of rotation (12) of the drive output spur gear (5) and the axis of rotation (10) of the drive input spur gear (2) lies in the region of 189 mm, and the vertical spacing between the axis of rotation (12) of the drive output spur gear (5) and the axis of rotation (10) of the drive input spur gear (2) lies in the region of 30 mm.

9. Portal axle according to Claim 1, **characterized in that** an axle bracket is arranged offset with respect to the axis of rotation (12) of the vehicle wheel in the direction of travel.

## Revendications

1. Pont portique doté d'un engrenage différentiel entraîné qui est relié à une roue de véhicule par l'intermédiaire respectivement d'arbres d'essieu (1) et respectivement d'un engrenage de portique, la roue de véhicule pouvant tourner autour d'un axe de rotation (12) et saillant sur un fond inférieur (11), une roue droite d'entraînement d'entrée (2) étant entraînée par l'arbre d'essieu (1) et une roue droite d'entraînement de sortie (5) étant reliée à la roue de véhicule et tournant autour de l'axe de rotation (12) de la roue de véhicule, l'écartement vertical (15) de l'axe de rotation (10) de la roue droite d'entraînement d'entrée (2) par rapport au fond inférieur (11) étant plus réduit que l'écartement vertical (18) de l'axe de rotation (12) de la roue droite d'entraînement de sortie (5) par rapport au fond inférieur (11), **caractérisé en ce que** dans chaque engrenage de portique, la roue droite d'entraînement d'entrée (2) est associée activement à une première roue droite de renvoi sur arbre intermédiaire (3) et que la première roue droite de renvoi sur arbre intermédiaire (3) est reliée fixement sans rotation à une deuxième roue droite de renvoi sur arbre intermédiaire (4) et que les deux roues droites de renvoi sur arbre intermédiaire (3, 4) tournent autour d'un axe de rotation (9), la deuxième roue droite de renvoi sur arbre intermédiaire (4) étant en association active avec la roue droite d'entraînement de sortie (5) et l'axe de rotation (9) des roues droites de renvoi sur arbre intermédiaire (3, 4) étant disposé à une certaine distance dans la direction verticale et horizontale par rapport à l'axe de rotation (12) de la roue droite d'entraînement de sortie (5) et l'écartement vertical (15) de l'axe de rotation (10) de la roue droite d'entraînement d'entrée (2) par rapport au fond inférieur (11) étant plus réduit qu'un écartement vertical (17) de l'axe de rotation (9) de la roue droite de renvoi sur arbre intermédiaire (3, 4) par rapport au fond inférieur (11), l'axe de rotation (9) de la roue droite de renvoi sur arbre intermédiaire (3, 4) se trouvant dans la direction verticale entre l'axe de rotation (12) de la roue droite d'entraînement de sortie (5) et l'axe de rotation (10) de la roue droite d'entraînement d'entrée (2) et l'arbre d'essieu (1) étant disposé au niveau d'une délimitation interne supérieure d'un pont de portique.

2. Pont portique selon la revendication 1, **caractérisé en ce que** les roues droites (2, 3, 4, 5) de l'engrenage de portique sont réalisées au moyen de dentures obliques.

3. Pont portique selon la revendication 1, **caractérisé en ce que** les angles d'inclinaison de la denture oblique des première et deuxième roues droites de renvoi sur arbre intermédiaire (3, 4) sont réalisés de telle sorte que les forces axiales des première et deuxième roues droites de renvoi sur arbre intermédiaire (3, 4) s'annulent presque.

4. Pont portique selon la revendication 1, **caractérisé en ce que** les porte-ressort reliant le pont portique à un châssis de véhicule sont reliés à l'engrenage de portique.

5. Pont portique selon la revendication 1, **caractérisé en ce que** la roue droite d'entraînement d'entrée (2) est disposée dans un carter de portique de l'engrenage de portique.

6. Pont portique selon la revendication 1, **caractérisé en ce qu'**une multiplication entre la roue droite d'entraînement d'entrée (2) et la première roue droite de renvoi sur arbre intermédiaire (3) est de l'ordre de grandeur de 2,2.

7. Pont portique selon la revendication 1, **caractérisé en ce qu'**une multiplication entre la deuxième roue droite de renvoi sur arbre intermédiaire (4) et la roue droite d'entraînement de sortie (5) est de l'ordre de grandeur de 1,8.

8. Pont portique selon la revendication 1, **caractérisé en ce que** l'écartement horizontal entre l'axe de rotation (12) de la roue droite d'entraînement de sortie (5) et l'axe de rotation (10) de la roue droite d'entraînement d'entrée (2) est de l'ordre de grandeur de 189 mm et que l'écartement vertical entre l'axe de rotation (12) de la roue droite d'entraînement de sortie (5) et l'axe de rotation (10) de la roue droite d'entraînement d'entrée (2) est de l'ordre de grandeur de 30 mm.

9. Pont portique selon la revendication 1, **caractérisé en ce qu'**un pont portique est disposé dans la direction de conduite de façon décalée par rapport à l'axe de rotation (12) de la roue de véhicule.
